# EUROPÄISCHE PATENTSCHRIFT

(11) **EP 2 509 764 B1**
(45) Veröffentlichungstag und Bekanntmachung des Hinweises auf die Patenterteilung: **16.04.2014**
(21) Anmeldenummer: 10785452.3
(22) Anmeldetag: 08.12.2010
(51) Int. Cl.: B29C 45/16, B29C 37/00, B32B 27/40, B32B 27/36

(54) **VERFAHREN ZUR HERSTELLUNG VON POLYURETHAN-VERBUNDBAUTEILEN SOWIE DIE VERWENDUNG DIESER VERBUNDBAUTEILE**
METHOD FOR PRODUCING POLYURETHANE COMPOSITE COMPONENTS, AND USE OF SAID COMPOSITE COMPONENTS
PROCÉDÉ DE FABRICATION D'ÉLÉMENTS COMPOSITES À BASE DE POLYURÉTHANE ET UTILISATION DESDITS ÉLÉMENTS COMPOSITES

(30) Priorität: 08.12.2009 DE 102009057136; 15.12.2009 DE 102009058180
(43) Veröffentlichungstag der Anmeldung: 17.10.2012
(73) Patentinhaber: Bayer Intellectual Property GmbH, 40789 Monheim (DE)
(72) Erfinder: SEIDEL, Andreas, 41542 Dormagen (DE); PROTTE, Rainer, 41542 Dormagen (DE); WENZ, Eckhard, 50931 Köln (DE); FRANZ, Uli, 42659 Solingen (DE); MÖLLER, Philipp, 50679 Köln (DE)
(74) Vertreter: BIP Patents
(86) Internationale Anmeldenummer: PCT/EP2010/069117
(87) Internationale Veröffentlichungsnummer: WO 2011/070043

(56) Entgegenhaltungen:
- EP-A1- 1 666 225
- EP-A2- 0 230 282
- WO-A1-2006/072366
- DE-A1- 10 109 226
- DE-A1- 19 746 265
- DE-A1-102007 051 482
- KR-B1- 100 798 614
- US-A- 5 910 538
- US-A1- 2003 197 307
- US-A1- 2008 292 864

## Beschreibung

Die vorliegende Erfindung betrifft ein Verfahren zur Herstellung von Verbundbauteilen mit stabiler Verbundhaftung, wobei diese einen strukturgebenden Träger aus einem thermoplastischer Kunststoff und mindestens eine im direkten Kontakt zu diesem Träger stehende Polyurethanschicht umfassen.

Darüber hinaus betrifft die vorliegende Erfindung die Verwendung spezieller Polycarbonatzusammensetzungen mit hoher Schmelzefließfähigkeit, und Zähigkeit in einem 2-Komponenten-Spritzguss- oder 2-Komponenten-Reaktivspritzgussprozess [2K-(R)IM] zur Herstellung eines mit mindestens einem Polyurethan (PU) beschichteten Zwei- oder Mehrkomponentenbauteils, welches sich durch gute Verbundhaftung der PU-Beschichtung(en) auf dem Trägermaterial auszeichnet.

Ferner offenbart die vorliegende Beschreibung Verbundbauteile mit hoher Zähigkeit sowie stabiler Verbundhaftung, wobei diese einen strukturgebenden Träger aus einem thennoplastischen Kunststoff und mindestens eine im direkten Kontakt zu diesem Träger stehende Polyurethanschicht umfassen, und deren Verwendung.

DE 196 50 854 C1 offenbart ein Verfahren zur Herstellung eines Mehrschicht-Kunststoffteils bei dem ein Kunststoff-Spritzgussteil mit mindestens einer Schicht aus einem 2-Komponenten-Duroplast, vorzugsweise Polyurethan, beschichtet wird. Bei diesem Verfahren werden das Kunststoffteil und die Schicht aus 2-Komponenten-Duroplast nacheinander zyklussynchron im selben Werkzeug gespritzt. Über den Einfluss der Natur des Trägermaterials und der Verfahrensparameter auf die Haftung zwischen Trägermaterial und mit diesem in Verbindung stehender Schicht des Verbundbauteils werden in der DE 196 50 854 C1 keine Hinweise gegeben.

US 6,558,599 B1 beschreibt ein Verfahren zur Herstellung eines lackierten Teils aus einem geformten thermoplastischen Material. Das Verfahren umfasst die Schritte
a) Spritzgießen des thermoplastischen Materials in eine erste Kavität eines Werkzeugs zur Formung des Teils,
b) Öffnen des Werkzeuges zur Kühlung zumindest der Oberfläche des Teils, wodurch es zu einer Schrumpfung des Teils kommt, und
c) Injektion eines Lacks in eine zweite Kavität des Werkzeugs mit dem Teil, wobei die zweite Kavität dieselben Dimensionen wie die erste Kavität besitzt.

Als mögliche Lacke werden in dieser Anmeldung auch solche auf Polyurethanbasis genannt.

In US 6,558599 B1 wird aber weder das Trägermaterial näher spezifiziert, noch ein Einfluss der Trägermaterialzusammensetzung auf die Hafteigenschaften des Verbundmaterials aufgezeigt.

WO 2006/072366 A1 beschreibt ein Verfahren zum Formen und Beschichten eines Substrats in einem Formwerkzeug mit wenigstens zwei Kavitäten. Das Verfahren umfasst die Schritte:
a) Formen eines Substrats in einer ersten Kavität des Formwerkzeugs,
b) das Einbringen des im vorangegangenen Schritt hergestellten Substrats in eine zweite Kavität des Formwerkzeugs und
c) Beschichten des Substrats in der zweiten Kavität mit einem Lack, wobei das Beschichten unter erhöhtem Druck erfolgt.

Beispielhaft und bevorzugt werden Polyurethanlacke und PC+ABS-Substrate (Polycarbonat + Acrylnitril-Butadien-Styrol-Substrate) genannt. Über den Einfluss der Zusammensetzung des Träger- und Polyurethanmaterials sowie über mögliche Temperatureinflüsse beim Formen auf die Verbundhaftung schweigt diese Anmeldung.

DE 10 2006 048 252 B3 offenbart ein Verfahren zur Herstellung eines Verbundbauteils, insbesondere umfassend ein Spritzgussteil sowie ein Polyurethan-Element, mit den Schritten
a) Herstellen eines Trägerbauteils,
b) Verbringen oder Umsetzen des Trägerbauteils in eine geöffnete Kavität eines Werkzeugs,
c) Schließen des Werkzeugs bis auf eine vorbestimmte Position, wobei eine vergrößerte Kavität mit einer ersten Größe geschaffen ist,
d) Erzeugen eines Unterdrucks in der vergrößerten Kavität erster Größe,
e) Einfüllen eines Flutungsmaterials in die vergrößerte Kavität und
f) Durchführen eines Prägeschrittes gleichzeitig mit dem Einfüllen und/oder anschließend an das Einfüllen des Flutungsmaterials, wobei die Kavität zumindest geringfügig verkleinert wird.

Ein Verfahren wie in der vorliegenden Erfindung in Verbindung mit spezifischen Zusammensetzungen zur Herstellung der Verbundbauteile, die eine erhöhte Haftung aufweisen, wird in DE 10 2006 048 252 B3 nicht offenbart.

DE 10 2006 033 059 A1 offenbart ein Verfahren zur Herstellung von Kunststoff-Innenraumteilen. Hierbei wird in einem ersten Schritt der Träger in einem ersten Werkzeug geformt, wobei das erste Werkzeug danach mindestens teilweise durch ein zweites Werkzeug ersetzt wird und anschließend in einem zweiten Schritt die Deckschicht auf dem Träger geformt wird. Dabei kommt als Trägermaterial eine Hartkomponente, z.B. PA+ABS- Blends (Polyamid+Acrylnitril-Butadien-Styrol) oder PC+ABS-Blends (Polycarbonat + Acrylnitril-Butadien-Styrol), und als Deckschicht eine Weichkomponente, vorzugsweise Polyurethanschaum, zum Einsatz. Über den Einfluss der Verfahrensparameter und der Zusammensetzung der Träger- und Polyurethanmaterialien auf die Verbundeigenschaften der so hergestellten Bauteile werden in der Anmeldung keine Hinweise gegeben. Vielmehr wird in DE 10 206 033 059 A1 vorgeschlagen, die Haftung durch Primer oder Laser-, Corona-, oder Plasmabehandlung zu verbessern.

Weitere Herstellungsverfahren für Verbandbauteile mit Polyurethanen sind in DE 1 0109 226 A1 und EP 1 666 225 A1 beschrieben.

Die technische Aufgabe der vorliegenden Erfindung bestand somit darin, ein Verfahrens zur Herstellung von Verbundbauteilen mit stabiler Verbundhaftung enthaltend (a) einen strukturgebenden Träger aus einem thermoplastischen Kunststoff und (b) mindestens eine im direkten Kontakt zu diesem Träger stehende Polyurethanschicht bereitzustellen.

Eine weitere technische Aufgabe bestand in der Bereitstellung von Polycarbonatzusammensetzungen mit hoher Schmelzefließfähigkeit und Zähigkeit, die bei einer Beschichtung mit einem Polyurethansystem in einem 2-Komponenten-Spritzgussprozess oder 2-Komponenten-(Reaktiv)Spritzgussprozess eine gute Haftung der Beschichtung auf dem Trägermaterial erzielen.

Darüber hinaus bestand die Aufgabe der vorliegenden Erfindung auch darin, Verbundbauteile mit hoher Zähigkeit sowie stabiler Verbundhaftung bereitzustellen, wobei diese einen strukturgebenden Träger aus einem thermoplastischen Kunststoff und mindestens eine im direkten Kontakt zu diesem Träger stehende Polyurethanschicht umfassen und in einem 2-Komponenten-Spritzgussprozess oder 2-Komponenten-(Reaktiv)Spritzgussprozess hergestellt werden.

Die Polyurethanschicht kann dabei beispielsweise zur Verbesserung der Oberflächeneigenschaften, der Haptik, der Optik, der Geräusch- und Wärmedämmung der Verbundbauteile dienen.

Die Aufgabe der vorliegenden Erfindung wird gelöst durch ein Verfahren zur Herstellung eines Verbundbauteils nach Anspruch 1 umfassend
a) einen Träger aus einer thermoplastischen Zusammensetzung und
b) mindestens eine in direktem Kontakt zum Träger stehende Polyurethanschicht,
in dem
(i) in einem ersten Verfahrensschritt die Schmelze der thermoplastischen Zusammensetzung
   in eine erste Werkzeugkavität eingespritzt und nachfolgend abgekühlt wird, wobei die thermoplastische Zusammensetzung
   A) 65,0 bis 90,0 Gew.-Teile, bezogen auf die Summe der Komponenten A und B, mindestens eines Polymers ausgewählt aus der Gruppe der aromatischen Polycarbonate, aromatischen Polyestercarbonate und aromatischen Polyester,
   B) 10,0 bis 35,0 Gew.-Teile, bezogen auf die Summe der Komponenten A und B, eines gegebenenfalls kautschuknodifizierten Vinyl(co)polymerisats und
   C) 0 bis 30,0 Gew.-Teile, bezogen auf die Summe der Komponenten A bis C, mindestens eines handelsüblichen Polymeradditivs, enthält,
(ii) in einem zweiten Verfahrensschritt die Kavität des Spritzgusswerkzeugs vergrößert und dadurch ein Spaltraum erzeugt wird,
(iii) im dritten Verfahrensschritt in den so resultierenden Spaltraum zwischen dem thermoplastischen Bauteil und der Werkzeugoberfläche der vergrößerten Kavität ein reaktives Polyurethanrohstoffgemisch enthaltend
   - mindestens eine Polyisocyanat-Komponente,
   - mindestens eine polyfunktionelle H-aktive Verbindung, und
   - optional mindestens ein Polyurethan-Additiv und/oder Prozesshilfsstoff
   mit Hockdruck- oder Niederdruckmaschinen eingebracht wird, wobei das Polyurethanrohstoffgemisch im Kontakt mit der Oberfläche des thermoplastischen Trägers zu einer kompakten Polyurethanschicht oder zu einer Polyurethanschaumschicht auspolymerisiert,
(iv) im vierten Verfahrensschritt das Verbundbauteil aus der Werkzeugkavität entformt wird,
wobei die Verfahrensschritte unmittelbar aufeinander folgen.

Durch die unmittelbare Abfolge der Verfahrensschritte wird verhindert, dass die Temperatur des Werkstücks während des Prozesses auf Raumtemperatur abkühlt. Hierdurch wird eine Reduktion der Herstellungszeiten und eine höhere Energieeffizienz des Gesamtverfahrens erreicht.

Die Verfahrensschritte (ii) und (iii) können unter Variation des Polyurethansystems mindestens einmal wiederholt werden, wobei nur auf einer oder beiden Seiten des Trägers ein oder mehrere Polyurethanschichten aufgebracht werden, so dass ein Verbundbauteil aus thermoplastischem Träger und mindestens zwei gleichen oder unterschiedlichen PU-Komponenten mit gegebenenfalls auch mehr als zweischichtigem Aufbau resultiert.

Vor dem Entformen des Werkstücks in den Schritten (ii) und (iv) wird das Werkstück bis zur Formstabilität abgekühlt.

Zur Erzeugung des Spaltraums in Verfahrensschritt (ii) kann entweder das Spritzgusswerkzeug geöffnet und nachfolgend eine Hälfte der Spritzgusswerkzeugkavität durch eine neue Hälfte mit größeren Hohlformmaßen ausgetauscht, oder das Bauteil von der ersten Werkzeugkavität in eine zweite, hinsichtlich seiner Hohlformmaße größeren Kavität desselben oder eines zweiten Werkzeugs umgesetzt, oder die erste Kavität um ein Spaltmaß geöffnet werden.

Das Umsetzen des Substrats im Verfahrensschritt (ii) kann nach bekannten Verfahren, wie sie beispielsweise beim Mehrfarbenspritzgießen angewendet werden, erfolgen. Typische Verfahren sind einerseits das Umsetzen mit Drehteller, Wendeplatte, Schiebekavität oder Indexplatte oder vergleichbare Verfahren, bei denen das Substrat auf einem Kern verbleibt. Verbleibt das Substrat zum Umsetzen auf dem Kern, hat dies den Vorteil, dass die Lage auch nach dem Umsetzen passgenau definiert ist. Andererseits sind aus dem Stand der Technik Verfahren zum Umsetzen eines Substrats bekannt, bei denen das Substrat, z.B. mit Hilfe eines Handhabungssystems, aus einer Kavität entnommen und in eine andere Kavität eingelegt wird. Das Umsetzen mit Entnahme des Substrats bietet größeren Gestaltungsspielraum bei der Beschichtung, z.B. bei der Generierung eines Umbugs oder maskierter Bereiche.

Die Polyurethanschicht kann dabei beispielsweise ein PU-Lack, ein PU-Schaum oder eine kompakte PU-Haut darstellen.

Die mit diesem Verfahren hergestellten Polyurethanschichten können beispielsweise Dicken von 1 µm bis zu 20 cm aufweisen.

In einer bevorzugten Ausführungsform handelt es sich bei der Polyurethanschicht um einen Lack mit einer Schichtdicke von 1 - 1000 µm.

In einer weiteren bevorzugten Ausführungsform handelt es sich bei der Polyurethanschicht um eine kompakte Haut mit einer Schichtdicke von 1 mm - 10 mm.

In einer weiteren bevorzugten Ausführungsform handelt es sich bei der Polyurethanschicht um einen Schaum mit einer Schichtdicke von 1 cm - 20 cm.

In einer bevorzugten Ausführungsform enthalten die thermoplastischen Zusammensetzungen des Trägers a):
A) 65,0 bis 80,0 Gew.-Teile, insbesondere 70,0 bis 80,0 Gew.-Teile, bezogen auf die Summe der Komponenten A und B, mindestens eines Polymers ausgewählt aus der Gruppe der aromatischen Polycarbonate, aromatischen Polyestercarbonate und aromatischen Polyester und
B) 20,0 bis 35,0 Gew.-Teile, insbesondere 20,0 bis 30,0 Gew.-Teile, bezogen auf die Summe der Komponenten A und B, eines gegebenenfalls kautschukmodifizierten Vinyl(co)polymerisats.

Komponente C wird bevorzugt in einem Anteil von 0,1 bis 15,0 Gew.-Teilen, insbesondere 0,2 bis 5,0 Gew.-Teilen, bezogen auf die Summe der Komponenten A bis C, eingesetzt.

In einer besonders bevorzugten Ausführungsform wird als Komponente A ein Gemisch aus mindestens einem aromatischen Polycarbonat und/oder Polyestercarbonat und mindestens einem aromatischen Polyester eingesetzt.

Das reaktive Polyurethanrohstoffgemisch hat bevorzugt eine Kennzahl von > 90 bis < 125, vorzugsweise > 100 bis < 120, und besonders bevorzugt von 105 bis 115. Die Kennzahl ist definiert als prozentuales Verhältnis der tatsächlich eingesetzten Isocyanat-Menge zur berechneten stöchiometrischen Menge bei kompletter Polyol-Umsetzung, d.h. Kennzahl = (Isocyanat-Menge eingesetzt / Isocyanat-Menge stöchiometrisch, berechnet) * 100.

In einer weiteren bevorzugten Ausführungsform wird die mit der thermoplastischen Polymerzusammensetzung in Kontakt stehende Oberfläche des Spritzgusswerkzeuges im Verfahrensschritt (iii) auf eine Temperatur im Bereich 50 bis 95°C, bevorzugt 60 bis 85°C, und besonders bevorzugt 60 bis 80°C temperiert.

In einer weiteren bevorzugten Ausführungsform wird die mit dem reaktiven Polyurethangemisch in Kontakt stehende Oberfläche des Spritzgusswerkzeuges im Verfahrensschritt (iii) auf eine Temperatur im Bereich 50 bis 160°C, bevorzugt 70 bis 120°C, weiter bevorzugt 80 bis 110°C, und besonders bevorzugt 90 bis 100 °C temperiert.

In einer weiter bevorzugten Ausführungsform wird die mit der thermoplastischen Polymerzusammensetzung in Kontakt stehende Oberfläche des Spritzgusswerkzeuges im Verfahrensschritt (iii) auf eine Temperatur im Bereich 50 bis 95°C, bevorzugt 60 bis 85°C, und besonders bevorzugt 60 bis 80°C temperiert und die mit dem reaktiven Polyurethangemisch in Kontakt stehende Oberfläche des Spritzgusswerkzeuges auf eine Temperatur im Bereich 50 bis 160°C, bevorzugt 70 bis 120°C, weiter bevorzugt 80 bis 110°C, und besonders bevorzugt 90 bis 100°C temperiert.

In einer bevorzugten Ausführungsform ist im Verfahrenschritt (iii) die Temperatur der polyurethanseitigen Werkzeugkavität mindestens 10°C, bevorzugt mindestens 15°C, besonders bevorzugt mindestens 20°C höher als die Temperatur der trägerseitigen (thermoplastseitigen) Werkzeugkavität.

In einen Ausführungsform der Erfindung wird ein Verfahren zur Herstellung eines Verbundbauteiles offenbart, umfassend:
a) einen Träger aus einer thermoplastischen Zusammensetzung und
b) mindestens eine in direktem Kontakt zum Träger stehende Polyurethanschicht,
   in dem
   (i) in einem ersten Verfahrensschritt die Schmelze der thermoplastischen Zusammensetzung
      in eine erste Werkzeugkavität eingespritzt und nachfolgend abgekühlt wird,
   (ii) in einem zweiten Verfahrensschritt die Kavität des Spritzgusswerkzeugs vergrößert und dadurch ein Spaltraum erzeugt wird,
   (iii) im dritten Verfahrensschritt in den so resultierenden Spaltraum zwischen dem thermoplastischen Bauteil und der Werkzeugoberfläche der vergrößerten Kavität ein reaktives Polyurethanrohstoffgemisch enthaltend
      - mindestens eine Polyisocyanat-Komponente,
      - mindestens eine polyfunktionelle H-aktive Verbindung, und
      - optional mindestens ein Polyurethan-Additiv und/oder Prozesshilfsstoff
      gespritzt wird, wobei das Polyurethanrohstoffgemisch im Kontakt mit der Oberfläche des thermoplastischen Trägers zu einer kompakten Polyurethanschicht oder zu einer Polyurethanschaumschicht auspolymerisiert,
   (iv) im vierten Verfahrensschritt das Verbundbauteil aus der Werkzeugkavität entformt wird,
wobei die Verfahrensschritte (ii) und (iii) mehrfach durchlaufen werden können, die Verfahrensschritte unmittelbar aufeinander folgen, und im Verfahrenschritt (iii) die Temperatur der polyurethanseitigen Werkzeugkavität mindestens 10°C, bevorzugt mindestens 15°C, besonders bevorzugt mindestens 20°C höher als die Temperatur der trägerseitigen (thermoplastseitigen) Werkzeugkavität ist.

In einer bevorzugten Ausführungsform wird im ersten Verfahrensschritt eine thermoplastische Polymerzusammensetzung verwendet, die bei Raumtemperatur und besonders bevorzugt auch bei -30°C ein zähes Bruchverhalten im Kerbschlagversuch nach ISO 180-1A, gekennzeichnet durch einen Kerbschlagzähigkeitswert von größer als 25 kJ/m², und/oder ein zähes (nicht splitterndes) Bruchbild im Durchstoßversuch nach ISO 6603 zeigt.

Die vorliegende Beschreibung betrifft weiterhin die Verwendung von Zusammensetzungen enthaltend
A) 65,0 bis 90,0 Gew.-Teile, bezogen auf die Summe der Komponenten A und B, mindestens eines Polymers ausgewählt aus der Gruppe der aromatischen Polycarbonate, aromatischen Polyestercarbonate und aromatischen Polyester,
B) 10,0 bis 35,0 Gew.-Teile, bezogen auf die Summe der Komponenten A und B, eines gegebenenfalls kautschukmodifizierten Vinyl(co)polymerisats und
C) 0 bis 30,0 Gew.-Teile, bezogen auf die Summe der Komponenten A bis C, mindestens eines handelsüblichen Polymeradditivs
zur Herstellung eines mit mindestens einem Polyurethan beschichteten Zwei- oder Mehrkomponentenverbundbauteils in einem 2-Komponenten-Spritzguss- oder 2-Komponenten-Reaktivspritzgussprozess.

Hierbei ist die Komponente A bevorzugt ein Gemisch aus mindestens einem aromatischen Polycarbonat und/oder Polyestercarbonat und mindestens einem aromatischen Polyester.

Darüber hinaus betrifft die vorliegende Beschreibung Verbundbauteile umfassend
a) einen Träger aus einer Zusammensetzung enthaltend
   A) 65,0 bis 90,0 Gew.-Teile, bezogen auf die Summe der Komponenten A und B, mindestens eines Polymers ausgewählt aus der Gruppe der aromatischen Polycarbonate, aromatischen Polyestercarbonate und aromatischen Polyester,
   B) 10,0 bis 35,0 Gew.-Teile, bezogen auf die Summe der Komponenten A und B, eines gegebenenfalls kautschukmodifizierten Vinyl(co)polymerisats und
   C) 0 bis 30,0 Gew.-Teile, bezogen auf die Summe der Komponenten A bis C, mindestens eines handelsüblichen Polymeradditivs sowie
b) mindestens eine in direktem Kontakt zum Träger stehende Polyurethanschicht
   hergestellt durch einen n 2-Komponenten-Spritzguss- oder 2-Komponenten-Reaktivspritzgussprozess.

Hierbei ist die Komponente A bevorzugt ein Gemisch aus mindestens einem aromatischen Polycarbonat und/oder Polyestercarbonat und mindestens einem aromatischen Polyester.

Die Verbundbauteile werden vorzugsweise hergestellt durch einen 2-Komponenten-Reaktivspritzgussprozess mit einem reaktiven Polyurethanrohstoffgemisch enthaltend
- mindestens eine Polyisocyanat-Komponente,
- mindestens eine polyfunktionelle H-aktive Verbindung und
- optional mindestens ein Polyurethan-Additiv und/oder Prozesshilfsstoff,
wobei das reaktive Polyurethanrohstoffgemisch eine Kennzahl von > 90 bis < 125, vorzugsweise > 100 bis < 120, und besonders bevorzugt von 105 bis 115, aufweist.

In besonders bevorzugter Ausführungsform weist das Verbundbauteil bei -30°C ein zähes (nicht splitterndes) Bruchverhalten unter multiaxialer Schlagbelastung gemessen am Bruchbild im Durchstoßversuch nach ISO 6603 auf.

Die Verbund-Haftung zwischen dem Träger aus Polycarbonat-Zusammensetzung und der Polyurethan-Beschichtung in den erfindungsgemäßen Verbundbauteilen beträgt in bevorzugter Ausführungsform mindestens 1 N/mm gemessen an aus dem Bauteil entnommenen Streifenproben mit einer Breite von 20 mm in einem Rollenschälversuch gemäß DIN 53357 A mit einer Prüfgeschwindigkeit von 100 mm/imin.

Die vorliegende Erfindung (siehe Anspruch 1) betrifft ferner die Verwendung eines Verbundbauteils erhältlich gemäß einem Verfahren der Ansprüche 1 bis 9 als Innen- oder Außenbauteil eines Schiene-, Luftfahrt- oder Kraftfahrzeuges.

Die im erfindungsgemäßen Verfahren zum Einsatz kommenden Polymer-Zusammensetzungen enthalten:

### Komponente A

Erfindungsgemäß geeignete aromatische Polycarbonate und Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate und Polyestercarbonate erfolgt z. B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 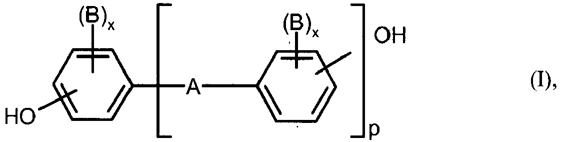 wobei
- A: eine Einfachbindung, C₁ bis C₅-Alkylen, C₂ bis C₅-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 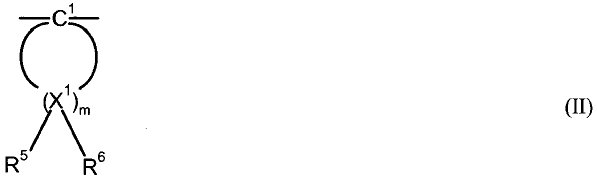 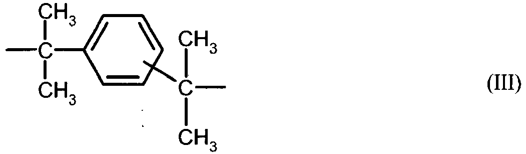
- B: jeweils C₁ bis C₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆ cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxy-phenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Ploroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxypnenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt bevorzugt im Bereich 1,18 bis 1,4, besonders bevorzugt im Bereich 1,20 bis 1,32 (gemessen an Lösungen von 0,5 g Polycarbonat oder Polyestercarbonat in 100 ml Methylenchlorid-Lösung bei 25°C). Das gewichtsgemittelte Molekulargewicht Mw der aromatischen Polycarbonate und Polyestercarbonate liegt bevorzugt im Bereich von 15.000 bis 35.000, weiter bevorzugt im Bereich von 20.000 bis 33.000, besonders bevorzugt 23.000 bis 30.000, bestimmt durch GPC (Gelpermeationschromatographie in Methylenchlorid mit Polycarbonat als Standard).

Die erfindungsgemäß als Komponente A in Frage kommenden aromatischen Polyester sind in bevorzugter Ausführungsform Polyalkylenterephthalate. Es handelt sich hierbei in besonders bevorzugter Ausführungsform um Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Besonders bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente B

Bei der Komponente B handelt es sich um kautschukbasierende Pfropfpolymerisate oder um kautschukfreie Vinyl(Co)Polymerisate oder um eine Mischung mehrerer solcher Polymerisate.

Als Komponente B zum Einsatz kommende kautschukbasierende Pfropfpolymerisate B.1 umfassen
- B.1.1: 5 bis 95, vorzugsweise 15 bis 92, insbesondere 25 bis 60 Gew.-%, bezogen auf Komponente B.1, wenigstens eines Vinylmonomeren auf
- B.1.2: 95 bis 5, vorzugsweise 85 bis 8, insbesondere 75 bis 40 Gew.-%, bezogen auf Komponente B.1, einer oder mehrerer Pfropfgrundlagen mit Glasübergangstemperaturen < 10°C, vorzugsweise < 0°C, besonders bevorzugt < -20°C.

Die Glasübergangstemperatur wurde mittels dynamischer Differenzkalorimetrie (DSC) gemäß der Norm DIN EN 61006 bei einer Heizrate von 10 K/min mit Definition der Tg als Mittelpunkttemperatur (Tangentenmethode) bestimmt.

Die Pfropfgrundlagen B.1.2 hat im allgemeinen eine mittlere Teilchengröße (d₅₀-Wert) von 0,05 bis 10 µm, vorzugsweise 0, 1 bis 5 µm, besonders bevorzugt 0,2 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Monomere B.1.1 sind vorzugsweise Gemische aus
- B.1.1.1: 50 bis 99, bevorzugt 65 bis 85, insbesondere 75 bis 80 Gew.-Teile, bezogen auf B.1.1, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
- B.1.1.2: 1 bis 50, bevorzugt 15 bis 35, insbesondere 20 bis 25 Gew.-Teilen, bezogen auf B.1.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1.1 sind ausgewählt aus mindestens einem der Monomere Styrol, α-Methylstyrol und Methylmethacrylat, bevorzugte Monomere B.1.1.2 sind ausgewählt aus mindestens einem der Monomere Acrylnitril, Maleinsäureanhydrid und Methylmethacrylat. Besonders bevorzugte Monomere sind B.1.1.1 Styrol und B.1.1.2 Acrylnitril.

Für die Pfropfpolymerisate B.1 geeignete Pfropfgrundlagen B.1.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie SilikonAcrylat-Kompositkautschuke.

Bevorzugte Pfropfgrundlagen B.1.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1.1 und B.1.1.2), mit der Maßgabe, dass die Glasübergangstemperatur der Komponente B.1.2 unterhalb < 10°C, vorzugsweise < 0°C, besonders bevorzugt < -20°C liegt.

Besonders bevorzugt als Pfropfgrundlage B.1.2 ist reiner Polybutadienkautschuk.

Besonders bevorzugte Polymerisate B.1 sind beispielsweise ABS- oder MBS-Polymerisate, wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B.1 werden durch radikalische Polymerisation, z.B. durch Emulsions-, Suspensions-, Lösungs- oder Massepolymerisation, vorzugsweise durch Emulsions- oder Massepolymerisation, insbesondere durch Emulsionspolymerisation hergestellt.

Bei Pfropfpolymerisaten B.1, die im Emulsionspolymerisationsverfahren herstellt wurden, beträgt der Gehalt an Pfropfgrundlage B.1.2 bevorzugt 20 bis 95 Gew.-%, besonders bevorzugt 40 bis 85 Gew.-%, insbesondere 50 bis 75 Gew.-%, jeweils bezogen auf B.1.

Bei Pfropfpolymerisaten B.1, die im Masseverfahren herstellt wurden, beträgt der Gehalt an Pfropfgrundlage B.1.2 bevorzugt 5 bis 50 Gew.-%, besonders bevorzugt 8 bis 25 Gew.-%, insbesondere 10 bis 20 Gew.-%, jeweils bezogen auf B.1.

Der Gelanteil der Pfropfgrundlage B.1.2 beträgt mindestens 30 Gew.-%, vorzugsweise mindestens 40 Gew.-%, insbesondere mindestens 60 Gew.-%, jeweils bezogen auf B.1.2 und gemessen als unlöslicher Anteil in Toluol.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B.1 auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Geeignete Acrylatkautschuke gemäß B.1.2 sind vorzugsweise Polymerisate aus Acrylsäurealkylestern, gegebenenfalls mit bis zu 40 Gew.-%, bezogen auf B.1.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzenden Monomere beträgt vorzugsweise 0,02 bis 5, insbesondere 0,05 bis 2 Gew.-%, bezogen auf die Pfropfgrundlage B.1.2. Bei cyclischen vernetzenden Monomeren mit mindestens drei ethylenisch ungesättigten Gruppen ist es vorteilhaft, die Menge auf unter 1 Gew.-% der Pfropfgrundlage B.1.2 zu beschränken.

Bevorzugte "andere" polymerisierbare, ethylenisch ungesättigte Monomere, die neben den Acrylsäureestern gegebenenfalls zur Herstellung der Pfropfgrundlage B.1.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.1.2 sind Emulsionspolymerisate, die einen Gelgehalt von mindestens 60 Gew.-% aufweisen.

Weitere geeignete Pfropfgrundlagen gemäß B.1.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.1.2 bzw. der Pfropfpolymere B.1 wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Bei den kautschukfreien Vinyl(Co)Polymerisaten gemäß Komponente B.2 handelt es sich vorzugsweise um kautschukfreie Homo- und/oder Copolymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigten Carbonsäuren sowie Derivaten (wie Anhydride und Imide) ungesättigter Carbonsäuren.

Insbesondere geeignet sind (Co)Polymerisate B.2 aus
- B.2:1: 50 bis 99 Gew.-%, bevorzugt 60 bis 80 Gew.-%, insbesondere 70 bis 80 Gew.-%, jeweils bezogen auf das Gesamtgewicht des (Co)Polymerisats B.2, mindestens eines Monomeren ausgewählt aus der Gruppe der Vinylaromaten, wie beispielsweise Styrol, α-Methylstyrol, kemsubstituierten Vinylaromaten, wie beispielsweise p-Methylstyrol, p-Chlorstyrol, und (Meth)Acrylsäure-(C₁-C₈)-Alkylester, wie beispielsweise Methylmethacrylat, n-Butylacrylat, tert.-Butylacrylat, und
- B.2.2: 1 bis 50 Gew.-%, bevorzugt 20 bis 40 Gew.-%, insbesondere 20 bis 30 Gew.-%, jeweils bezogen auf das Gesamtgewicht des (Co)Polymerisats B.2, mindestens eines Monomeren ausgewählt aus der Gruppe der Vinylcyanide, wie beispielsweise ungesättigte Nitrile wie z.B. Acrylnitril und Methacrylnitril, (Meth)Acrylsäure-(C₁-C₈)-Alkylester, wie beispielsweise Methylmethacrylat, n-Butylacrylat, tert.-Butylacrylat, ungesättigte Carbonsäuren und Derivate ungesättigter Carbonsäuren, wie beispielsweise Maleinsäureanhydrid und N-Phenyl-Maleinimid.

Diese (Co)Polymerisate B.2 sind harzartig, thermoplastisch und kautschukfrei. Besonders bevorzugt ist das Copolymerisat aus B.2.1 Styrol und B.2.2 Acrylnitril.

Derartige (Co)Polymerisate B.2 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch GPC) zwischen 15.000 und 250.000 g/mol, bevorzugt im Bereich 80.000 bis 150.000 g/mol

### Komponente C

Die Zusammensetzung kann als Komponente C handelsübliche Polymeradditive enthalten. Als handelsübliche Polymeradditive gemäß Komponente C kommen Additive wie beispielsweise Flammschutzmittel (beispielsweise Phosphorverbindungen wie Phosphor- oder Phosphonsäureester, Phosphonatamine und Phosphazene oder Halogenverbindungen), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasem), interne und externe Gleit- und Entformungsmittel (beispielsweise Pentaerythrittetrastearat, Stearylstearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Nukleirmittel, Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln), IR-Absorbentien, optische Aufheller, fluoreszierende Additive, Füll- und Verstärkungsstoffe (beispielsweise Talk, ggf. gemahlene Glas- oder Karbonfasern, Glas- oder Keramik(hohl)kugeln, Glimmer, Kaolin, CaCO₃ und Glasschuppen) sowie Farbstoffe und Pigmente (beispielsweise Ruß, Titandioxid oder Eisenoxid), Schlagzähigkeitsmodifikatoren, die nicht unter die Definition der Komponente B.1 fallen, und Brönstet-saure Verbindungen als Basenfänger, oder aber Mischungen mehrerer der genannten Additive in Frage.

### Polyurethane

Als Beschichtung wird vorzugsweise ein Polyurethanschaum oder eine kompakte Polyurethanschicht eingesetzt.

Die erfindungsgemäß zum Einsatz kommenden Polyurethane erhält man durch Umsetzung von Polyisocyanaten mit H-aktiven polyfunktionellen Verbindungen, vorzugsweise Polyolen.

Dabei werden unter dem Begriff "Polyurethan" im Rahmen dieser Erfindung auch Polyurethanharnstoffe verstanden, bei denen als H-aktive polyfunktionelle Verbindungen solche Verbindungen mit N-H-Funktionalität gegebenenfalls in Abmischung mit Polyolen zum Einsatz kommen.

Geeignete Polyisocyanate sind die dem Fachmann an sich bekannten aromatischen, araliphatischen, aliphatischen oder cycloaliphatischen Polyisocyanate einer NCO-Funktionalität von bevorzugt ≥ 2, welche auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Diese können einzeln oder in beliebigen Mischungen untereinander eingesetzt werden.

Die vorstehend genannten Polyisocyanate basieren dabei auf dem Fachmann an sich bekannten Di- bzw. Triisocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Di- bzw. Triisocyanate sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-'1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur^{®} W, Bayer AG, Leverkusen, DE), 4-Isocyanatomethyl-1,8-octandiisocyanat (Triisocyanatononan, TIN), ω,ω'-Diisocyanato-1,3-dimethylcyclohexan (H₆XDI), 1-Isocyanato-1-methyl-3-isocyanato-methylcyclohexan, 1-Isocyanato-1-methyl-4-isocyanato-methylcyclohexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), polymeres MDI (pMDI) 1,5-Diisocyanatonaphthalin, 1,3-Bis(isocyanato-methyl)benzol (XDI) sowie beliebige Mischungen genannter Verbindungen.

Bevorzugt weisen die Polyisocyanate dabei eine mittlere NCO-Funktionalität von 2,0 bis 5,0, bevorzugt von 2,2 bis 4,5, besonders bevorzugt von 2,2 bis 2,7 und einen Gehalt an Isocyanatgruppen von 5,0 bis 37,0 Gew.-%, bevorzugt von 14,0 bis 34,0 Gew.-% auf.

In einer bevorzugten Ausführungsform werden Polyisocyanate oder Polyisocyanatgemische der vorstehend genannten Art mit ausschließlich aliphatisch und/oder cycloaliphatisch gebundenen Isocyanatgruppen eingesetzt.

Ganz besonders bevorzugt basieren die Polyisocyanate der vorstehend genannten Art auf Hexamethylendiisocyanat, Isophorondiisocyanat, den isomeren Bis-(4,4'-isocyanatocyclohexyl)-methanen sowie deren Mischungen.

Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 15.000, vorzugsweise 600 bis 12.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 82 bis 599, vorzugsweise 62 bis 200, wie z.B. Ethylenglykol, Trimethylolpropan, Propandiol-1,2 oder Butandiol-1,4 oder Butandiol-2,3, insbesondere jedoch höhermolekulare Polyetherpolyole und/oder Polyesterpolyole der aus der Polyurethanchemie an sich bekannten Art mit Molekulargewichten von 600 bis 12.000, vorzugsweise 800 bis 4.000, die mindestens zwei, in der Regel 2 bis 8, vorzugsweise aber 2 bis 6 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind.

Zur Herstellung der NCO-Prepolymeren geeignete Verbindungen mit gegenüber Isocyanatgruppen reaktionsfähigen Gruppen, insbesondere Hydroxylgruppen, sind beispielsweise die in der US-A 4 218 543 offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymeren weisen im allgemeinen einen NCO-Gehalt von 10 bis 26 vorzugsweise 15 bis 26 Gew.% auf. Hieraus geht bereits hervor, dass im Rahmen der vorliegenden Erfindung unter "NCO-Prepolymeren" bzw. unter "Prepolymeren mit endständigen Isocyanatgruppen" sowohl die Umsetzungsprodukte als solche als auch die Gemische mit überschüssigen Mengen an nicht umgesetzten Ausgangspolyisocyanaten, die oft auch als "Semiprepolymere" bezeichnet werden, zu verstehen sind.

Als aliphatische Diole mit einer OH-Zahl von >500 mg KOH/g kommen die üblicherweise in der Polyurethanchemie vernetzenden Kettenverlängerer in Betracht wie Ethylenglykol, Diethylenglykol, Propylenglykol, Dipropylenglykol, Butandiol-1,4, Propandiol-1,3. Bevorzugt sind Diole wie 2-Butandiol-1,4, Butendiol-1,3, Butandiol-2,3 und/oder 2-Methylpropandiol-1,3. Selbstverständlich ist es auch möglich, die aliphatischen Diole im Gemisch untereinander einzusetzen.
Als H-aktive Komponente eignen sich Polyole mit einer mittleren OH-Zahl von 5 bis 600 mg KOH/g und einer mittleren Funktionalität von 2 bis 6. Bevorzugt sind Polyole mit einer mittleren OH-Zahl von 10 bis 50 mg KOH/g. Erfindungsgemäß geeignete Polyole stellen beispielsweise Polyhydroxypolyether dar, die durch Alkoxylierung geeigneter Startennoleküle wie Ethylenglykol, Diethylenglykol, 1,4-Dihydroxybutan, 1,6-Dihydroxyhexan, Dimethylolpropan, Glycerin, Pentaerythrit, Sorbit oder Saccharose zugänglich sind. Als Starter können ebenfalls fungieren Ammoniak oder Amine wie Ethylendiamin, Hexamethylendiamin, 2,4-Diaminotoluol, Anilin oder Aminoalkohole oder Phenole wie Bisphenol-A. Die Alkoxylierung erfolgt unter Verwendung von Propylenoxid und/oder Ethylenoxid in beliebiger Reihenfolge oder als Gemisch.

Neben Polyolen kann zusätzlich mindestens ein weiterer Vernetzer und/oder Kettenverlängerer enthalten sein ausgewählt aus der Gruppe, die Amine und Aminoalkohole, beispielsweise Ethanolamin, Diethanolamin, Diisopropanolamin, Ethylendiamin, Triethanolamin, Isophrondiamin, N,N'-dimethyl(diethyl)-ethylendiamin, 2-amino-2-methyl (oder ethyl)-1-propanol, 2-Amino-1-butanol, 3-Amino-1,2-propandiol, 2-Amino-2-methyl(ethyl)-1,3-propandiol, und Alkohole, beispielsweise Ethylenglykol, Diethylenglykol, 1,4-Dihydroxybutan, 1,6-Dihydroxyhexan, Dimethylolpropan, Glycerin und Pentaerythrit, sowie Sorbit und Saccharose, oder Gemische dieser Verbindungen enthält.

Ferner geeignet sind Polyesterpolyole, wie sie durch Umsetzung niedermolekularer Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind, sofern die Viskosität der H-aktiven Komponente nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. von Aldehyd-Keton-Harzen, erhalten werden können, sowie Modifikationen von Rizinusöl und Polyole auf Basis anderer natürlicher Öle geeignet.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxyverbindungen werden in an sich bekannter Weise z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen lässt. Es ist aber auch möglich, eine fertige wässrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für die Herstellung von Polyurethanen geeignet. Bei Verwendung von Polyetherpolyolen, welche gemäß DE-A 2 442 101, DE-A 2 844 922 und DE-A 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Vertreter der genannten, als H-aktiven Verbindungen zu verwendenden Verbindungen sind z.B. in High Polymers, Vol. XVI, "Polyurethanes Chemistry and Technology", Saunders-Frisch (Hrg.) Interscience Publishers, New York, London, Bd. 1, S. 32-42, 44,54 und Bd. II, 1984, s. 5-6 und S. 198-199 beschrieben.

Es können auch Gemische der aufgezählten Verbindungen eingesetzt werden.

Die Begrenzung der mittleren OH-Zahl und mittleren Funktionalität der H-aktiven Komponente ergibt sich insbesondere aus der zunehmenden Versprödung des resultierenden Polyurethans. Grundsätzlich sind dem Fachmann aber die Einflussmöglichkeiten auf die polymerphysikalischen Eigenschaften des Polyurethans bekannt, so dass NCO-Komponente, aliphatisches Diol und Polyol in günstiger Weise aufeinander abgestimmt werden können.

Die Polyurethanschicht (b) kann geschäumt oder massiv, wie z.B. als Lack oder Beschichtung vorliegen.

Zu deren Herstellung können alle an sich bekannten Hilfs- und Zusatzstoffe wie z.B. Trennmittel, Treibmittel, Füllstoffe, Katalysatoren und Flammschutzmittel eingesetzt werden.

Gegebenenfalls als Hilfs- und Zusatzmittel sind dabei zu verwenden:
a) Wasser und/oder leicht flüchtige anorganische oder organische Substanzen als Treibmittel Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel Luft, CO₂ oder N₂O in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden.
b) Katalysatoren
   Bei den Katalysatoren handelt sich beispielsweise um tertiäre Amine (wie Triethylamin, Tributylamin, N-Methylmorpholin, N-Ethylmorpholin, N,N,N',N'-Tetramethylethylendiamin, Pentamethyldiethylentriamin und höhere Homologe, 1,4-Diazabicyclo-(2,2,2)octan, N-Methyl-N'-dimethylaminoethylpiperazin, Bis-(dimethylaminoal-kyl)piperazine, N,N-Dimethylbenzylamin, N,N-Dimethylcyclohexylamin, N,N-Diethylben-zylamin, Bis-(N,N-diethylamiuo-ethyl)adipat, N,N,N',N'-Tetramethyl-1,3-butandiamin, N,N-Dimethyl-β-phenylethylamin, 1,2-Dimethylimidazol, 2-Methylimidazol), monocyclische und bicyclische Amide, Bis-(dialkylamino)alkylether, Amidgruppen (vorzugsweise Formamidgruppen) aufweisende tertiäre Amine, Mannichbasen aus sekundären Aminen (wie Dimethylamin) und Aldehyden, (vorzugsweise Formaldehyd oder Ketonen wie Aceton, Methylethylketon oder Cyclohexanon) und Phenolen (wie Phenol, Nonylphenol oder Bisphenol), gegenüber Isocyanatgruppen aktive Wasserstoffatome aufweisende tertiäre Amine (z.B. Triethanolamin, Triisopropanolamin, N-Methyldiethanolamin, N-Ethyldietanolamin, N,N-Dimethylethanolamin), sowie deren Umsetzungsprodukte mit Alkylenoxiden wie Propylenoxid und/oder Ehtylenoxid, sekundärtertiäre Amine, Silaamine mit Kohlenstoff-Silicium-Bindungen (2,2,4-Trimethyl-2-silamorpholin und 1,3-Diethylaminomethyltetramethyldisiloxan), stickstoffhaltige Basen (wie Tetraalkylammoniumhydroxide), Alkalihydroxide (wie Natriumhydroxid, Alkaliphenolate wie Natriumphenolat), Alkalialkoholate (wie Natriummethylat), und/oder Hexahydrotriazine.
   Die Reaktion zwischen NCO-Gruppen und Zerewitinoff-aktiven Wasserstoffatomen wird in an sich bekannter Weise auch durch Lactame und Azalactame stark beschleunigt, wobei sich zunächst ein Assoziat zwischen dem Lactam und der Verbindung mit acidem Wasserstoff ausbildet.
   Es können auch organische Metallverbindungen, insbesondere organische Zinn- und/oder Bismuthverbindungen, als Katalysatoren verwendet werden. Als organische Zinnverbindungen kommen neben schwefelhaltigen Verbindungen wie Di-n-octyl-zinn-mercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Organische Bismuth-Katalysatoren werden beispielsweise in der Patentanmeldung WO 2004/000905 beschrieben.
   Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen.
   Die Katalysatoren werden in der Regel in einer Menge von etwa 0,001 bis 10 Gew.%, bezogen auf die Gesamtmenge an Verbindungen mit mindestens zwei gegenüber Isocyanaten reaktionsfähigen Wasserstoffatomen, eingesetzt.
c) Oberflächenaktive Zusatzstoffe wie Emulgatoren und Schaumstabilisatoren.
   Als Emulgatoren kommen z.B. die Natriumsalze von Rizinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Rizinolsäure oder von polymeren Fettsäuren können als oberflächenaktive Zusatzstoffe mitverwendet werden.
   Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Von besonderem Interesse sind vielfach über Allophanatgruppen verzweigte Polysiloxan-Polyoxyalkylen-Copolymere.
d) Reaktionsverzögerer
   Als Reaktionsverzögerer kommen z.B. sauer reagierende Stoffe (wie Salzsäure oder organische Säurehalogenide) in Frage.
e) Additive
   Als PU-Additive kommen beispielsweise Zellregler der an sich bekannten Art (wie Paraffine oder Fettalkohole) oder Dimethylpolysiloxane sowie Pigmente oder Farbstoffe und Flammschutzmittel der an sich bekannten Art (z.B. Tris-chlorethylphosphat, Trikresylphosphat oder Ammoniumphosphat und -polyphosphat), ferner Stabilisatoren gegen Alterungs- und Witterungseinflüsse, Weichmacher und fungistatisch und bakteriostatisch wirkende Substanzen sowie Füllstoffe (wie Bariumsulfat, Kieselgur, Ruß oder Schlämmkreide) in Betracht.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sind dem Fachmann bekannt und in der Literatur beschrieben.

### Beispiele

### Polycarbonat-Zusammensetzungen

### Komponente A-1

Lineares Polycarbonat auf Basis von Bisphenol-A mit einem gewichtsgemittelten Molekulargewicht M_{w} von 17.000 g/mol.

### Komponente A-2

Lineares Polycarbonat auf Basis von Bisphenol-A mit einem gewichtsgemittelten Molekulargewicht M_{w} von 25.000 g/mol.

### Komponente A-3

Lineares Polycarbonat auf Basis von Bisphenol-A mit einem gewichtsgemittelten Molekulargewicht M_{w} von 28.000 g/mol.

### Komponente A-4

Lineares Polycarbonat auf Basis von Bisphenol-A mit einem gewichtsgemittelten Molekulargewicht M_{w} von 30.000 g/mol.

### Komponente A-5

Polybutylenterephthalat mit einer Schmelze-Volumenfließrate (MVR) von 14 cm³/10min bei 260°C/2.16kg gemessen nach ISO 1133.

### Komponente B-1

Präcompound aus einem in Emulsion hergestellten ABS-Pfropfpolymerisat und einem in Massepolymerisation hergestellten SAN-Polymerisat. Der Präcompound weist ein Acrylnitril : Butadien : Styrol-Gewichtsverhältnis von 20:28:52 Gew.% auf.

### Komponente B-2

Präcompound aus einem in Emulsion hergestellten ABS-Pfropfpolymerisat und einem in Massepolymerisation hergestellten SAN-Polymerisat. Der Präcompound weist ein Acrylnitril : Butadien : Styrol-Gewichtsverhältnis von 16:27:57 Gew.% auf.

### Komponente B-3

ABS-Pfropfpolymerisat mit Kern-Schale Struktur hergestellt in Emulsionspolymerisation bestehend aus 42 Gew.-% Styrol-Acrylnitril Copolymer mit einem Verhältnis von Styrol zu Acrylnitril von 72 : 28 Gew.-% als Hülle auf 58 Gew.-% einer teilchenförmigen Pfropfgrundlage mit einer mittleren Teilchengröße d₅₀ von 0,3 µm als Kern, wobei die Pfropfgrundlage aus reinem Polybutadienkautschuk besteht.

### Komponente B-4

ABS-Polymerisat hergestellt durch Masse-Polymerisation von 88 Gew.-% bezogen auf das ABS-Polymerisat einer Mischung aus 24 Gew.% Acrylnitril und 76 Gew.-% Styrol in Gegenwart von 12 Gew.-% bezogen auf das ABS-Polymerisat eines linearen Polybutadienkautschuks.

### Komponente B-5

Clearstrengih® E920: Methylmethacrylat/Butadien/Styrol-Polymerisat (MBS) mit Kern-Schale-Struktur, hergestellt in Emulsionspolymerisation, mit einem Polybutadiengehalt von etwa 75 Gew.- % (Arkema, Frankreich).

### Komponente B-6

Styrol/Acrylnitril-Copolymerisat (SAN) mit einem Styrol-Acrylnitril-Gewichtsverhältnis von 76:24.

### Kompomente B-7

Paraloid® EXL 2650: Methylmethacrylat/Butadien-Polymerisat (MB) mit Kern-Schale-Struktur, hergestellt in Emulsionspolymerisation, mit einem Polybutadiengehalt von etwa 80 Gew.-% (Rohm & Haas, Frankreich).

### Komponente C

C1: Pentaerythrittetrastearat (PETS) als Gleit-/Enformungsmittel
C2: Irganox® B900: Gemisch aus 80 Gew.-% Irgafos® 168
   (Tris-(2,4-di-tert.-butyl)phenyl-phosphit) und 20 Gew.-% Irganox® 1076 (Octadecyl-3-(3,5-di-tert-butyl-4-hydroxyphenyl)propionat) (BASF, Deutschland)
C3: Irganox® 1076 (Octadecyl-3-(3,5-di-tert-butyl-4-hydroxyphenyl)propionat) (BASF, Deutschland)
C4: Ruß als Pigment

### Reaktives Polyurethanrohstoffgemisch

Als Polyurethan-Beschichtungssystem kamen Mischungen aus Bayflex® VP.PU 47IF01A (Polyolkomponente) und Desmodur® VP.PU 48IF30 (Diisocyanat-Komponente), beide von Bayer MaterialScience AG, Leverkusen, Deutschland, mit Kennzahlen von 90 bis 115 zum Einsatz.

Bayflex® VP.PU 47IF01A ist ein Polyol auf Basis eines langkettigen Polyethers, enthaltend Ethandiol, Diethanolamin, Isophorondiamin, mit einer Viskosität nach DIN 53019 von 1.600 mPa.s bei 20 °C, einer Dichte nach DIN 51757von 1,04 g/cm³ bei 20 °C und einer Hydroxylzahl von 166 mg KOH/g.

Desmodur® VP.PU 48IF30 ist ein aliphatisches Isocyanat auf Basis von Isophorondiisocyanat (IPDI) mit einem NCO-Gehalt nach DIN EN ISO 11909 von 30,5 Gew.%, einer Viskosität bei 23°C nach DIN EN ISO 3219/A.3 von 200 mPa·s und einer Dichte bei 20 °C nach DIN EN ISO 2811 von 1,1 g/cm³.

### Herstellung und Charakterisierung der Polycarbonat-Formmassen

Auf einem Zweischneckenextruder (ZSK-25) (Fa. Werner und Pfleiderer) werden die in Tabellen 1 bis 3 aufgeführten Einsatzstoffe bei einer Drehzahl von 220 Upm und mit einem Durchsatz von 20 kg/h bei einer Schmelzetemperatur im Bereich von 260 bis 280°C compoundiert und nach Abkühlen und Verfestigung der Schmelze des Compounds granuliert.

Die aus der jeweiligen Compoundierung resultierenden Granulate werden auf einer Spritzgussmaschine (Fa. Arburg) bei einer Schmelzetemperatur von 260°C und einer Werkzeugtemperatur von 80°C zu Prüfkörpern der Abmessung 80 mm x 10 mm x 4 mm verarbeitet.

Sofern nicht anders angegeben, werden die in der vorliegenden Anmeldung genannten Größen nach den folgenden Verfahren bestimmt:

Die Duktilität der Formmassen wird beurteilt anhand des Kerbschlagzähigkeitswertes aₖ gemessen an diesen Prüfkörpern gemäß ISO 180-1A bei 23°C und -30°C.

Die Wärmeformbeständigkeit wird beurteilt anhand des Vicat B 120- bzw. Vicat B50-Wertes gemessen an diesen Prüfkörpern gemäß ISO 306.

Die Schmelzefließfähigkeit wird beurteilt anhand der Schmelzeviskosität gemessen bei 260°C und einer Scherrate von 1000 s⁻¹ in Anlehnung an ISO 11443.

Die Verbund-Haftung zwischen dem Substrat aus Polycarbonat-Zusammensetzung und der Polyurethan-Haut wird an Streifenproben mit einer Breite von 20 mm, welche aus den so hergestellten, partiell PU-beschichteten 2-Komponenten-Verbundplatten gesägt wurden, durch einen Rollenschälversuch gemäß DIN 53357 A mit einer Prüfgeschwindigkeit von 100 mm/min ermittelt.

### Herstellung der Verbundbauteile

Es wurden partiell oberflächig beschichtete Formteile mit einer projizierten Fläche von 412 cm² auf einer Spritzgießmaschine in einem Spritzgießwerkzeug mit zwei Kavitäten (einer substratseitigen Kavität und einer polyurethanseitigen Beschichtungskavität, die mit einer RIM-Anlage verknüpft war), hergestellt. Bei dem Verbundbauteil handelt es sich um ein plattenförmiges Bauteil aus thermoplastischem Kunststoff (Träger), dessen Fläche partiell mit einer Polyurethanhaut beschichtet wurde. Die Wanddicke des Trägerformteils betrug ca. 4 mm. Die Polyurethanschichtdicke betrug ebenfalls 4 mm.

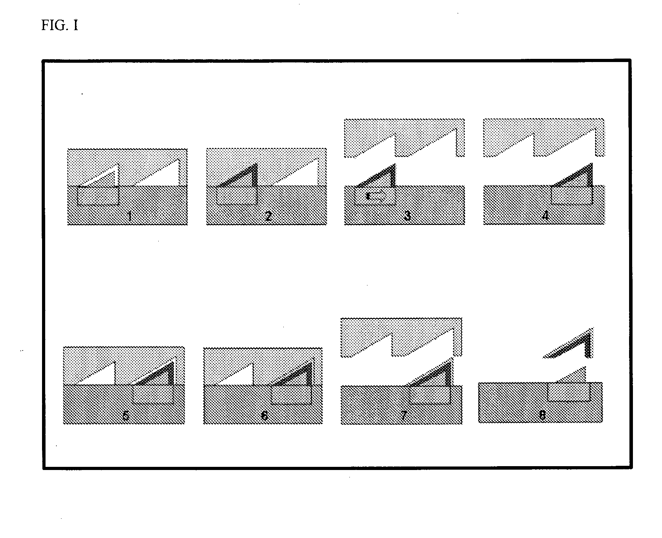

Das erfindungsgemäße Verfahren zur Herstellung der in den Beispielen beschriebenen erfindungsgemäßen Verbundbauteile ist zur besseren Veranschaulichung in Figur 1 dargestellt.

Im ersten Verfahrensschritt wurde das Trägerfonnteil hergestellt. Dazu wurde thermoplastisches Kunststoffgranulat der Zusammensetzungen wie in Tabellen 1 bis 3 beschrieben in einem Spritzgießzylinder aufgeschmolzen und bei einer Temperatur von 270°C in die erste Werkzeugkavität des geschlossenen Werkzeugs eingespritzt (Schritte 1 und 2 in Figur 1). Diese Werkzeugkavität wurde auf Temperaturen von 80 beziehungsweise 100°C temperiert. Nach Ablauf der Nachdruckzeit und Kühlzeit, die zur Verfestigung des Trägers führte, wurde im zweiten Verfahrensschritt das Werkzeug geöffnet (Schritt 3 in Figur 1). Dabei wurde das hergestellte Trägerbauteil auf der Auswerferseite des Spritzgießwerkzeugs gehalten und von der Träger-Position (Schritt 3 in Figur 1) komplett mit dem Werkzeugkern über einen Schieber in die Beschichtungs-Position (Schritt 4 in Abbildung 1) verfahren. Danach wurde das Spritzgießwerkzeug erneut geschlossen (Schritt 5 in Figur 1), eine Schließkraft für einen Druck von maximal 200 bar wurde aufgebaut und im dritten Verfahrensschritt das lösemittelfreie reaktive Polyurethansystem (s.o.) unter einem Druck von ca. 30 bar in die Beschichtungkavität eingespritzt (Schritt 6 in Figur 1). Die zwei reaktiven Komponenten des Polyurethan-Beschichtungssystems wurden dabei von der RIM-Anlage in einen Hochdruckgegenstrommischkopf gefördert und vor dem Einspritzen dort vermischt. Die PU-seitige Kavität wurde dabei auf Temperaturen von 80 beziehungsweise 100°C temperiert. Nach dem Ende des Einspritzens wurde die Einspritzdüse des Polyurethan-Mischkopfes mittels eines Hydraulikzylinders unter einem Druck von zunächst 50 bar versiegelt, um ein Zurückströmen des Beschichtungsmaterials zu verhindern. Nach Ablauf der Reaktions- und Kühlzeit wurde im vierten Verfahrensschritt das Werkzeug ein weiteres Mal geöffnet (Schritt 7 in Figur 1) und das beschichtete Fonnteil entformt (Schritt 8 in Figur 1). Tabelle 1 zeigt den Einfluß der Trägerzusammensetzungen (Polyurethansystem in allen Fällen: Gemisch aus Bayflex VP.PU 471F01A und Desmodur VP.PU 48IF30 mit einer Kennzahl von 95; Temperatur der substratseitigen Werkzeugkavität in allen Fällen: 80°C, Temperatur der PU-seitigen Werkzeugkavität in allen Fällen: 80°C) auf die Haftung zwischen den Schichten des Verbundbauteils.

**Tabelle 1:**

| | **1 (V)** | **2 (V)** | **3 (V)** | **4** | **5** | **6 (V)** | **7** | **8** | **9** | **10** |
|---|---|---|---|---|---|---|---|---|---|---|
| A1 | | | | | | | | 71 | | |
| A2 | | | | | | | | | 71 | |
| A3 | | 50 | 61 | 71 | 80 | 98 | 71 | | | |
| A4 | | | | | | | | | | 71 |
| B1 | | | | | | | 27 | 27 | | |
| B2 | 54 | 30 | 23,4 | 17,4 | 12 | 1,2 | | | 25 | |
| B3 | 3 | | | | | | | | | |
| B4 | 23 | 11,5 | 9 | 6,7 | 4,6 | 0,46 | | | 4 | 22 |
| B5 | | | | | | | | | | 7 |
| B6 | 20 | 8,5 | 6,6 | 4,9 | 3,4 | 0,34 | 2 | 2 | | |
| C1 | 0,75 | 0,75 | 0,75 | 0,75 | 0,75 | 0,75 | 0,75 | 0,75 | 0,75 | 0,75 |
| C2 | 0,10 | 0,10 | 0,10 | 0,10 | 0,10 | 0,10 | 0,10 | 0,10 | 0,10 | 0,10 |
| C3 | 0,20 | 0,20 | 0,20 | 0,20 | 0,20 | 0,20 | 0,20 | 0,20 | 0,20 | 0,20 |
| C4 | 0,2 | 0,2 | 0,2 | 0,2 | 0,2 | 0,2 | 0,2 | 0,2 | 0,2 | 0,2 |
| Haftung des Trägers zur PU-Haut [N/mm] | 0,40 | 0,38 | 0,75 | 1,08 | 1,50 | 2,40 | 1,12 | 1,28 | 1,05 | 1,03 |
| ak (23°C) - 260°C [kJ/m²] | 25 | 48 | 49 | 52 | 66 | 13 | 51 | 35 | 48 | 59 |
| ak (-30°C) - 260°C [kJ/m²] | 11 | 27 | 27 | 26 | 26 | 11 | 40 | 17 | 36 | n.g.* |
| Vicat B120 [°C] | 99,0 | 110,3 | 120,0 | 129,2 | 139,1 | 142,9 | 131,3 | 128,3 | 130,2 | 128,7 |
| Schmelzeviskosität (260°C/1000s⁻¹) [Pa·s] | 154 | 186 | 205 | 238 | 309 | 630 | 289 | 188 | 254 | 234 |

| | | | | | | | | | | |
|---|---|---|---|---|---|---|---|---|---|---|
| *nicht gemessen | | | | | | | | | | |

In Tabelle 2 wird der Einfluss eines Polyester-haltigen Systems auf die Haftung des Verbundbauteils dargestellt (PU-System: Gemisch aus Bayflex VP.PU 471F01A und Desmodur VP.PU 48IF30 mit einer Kennzahl von 95; Temperatur der Substrat-seitigen Werkzeugkavität: 80°C, Temperatur der PU-seitigen Werkzeugkavität: 80°C).

**Tabelle 2:**

| | **11** |
|---|---|
| A2 | 46,81 |
| A5 | 40,30 |
| B7 | 12,00 |
| C1 | 0,59 |
| C2 | 0,30 |
| C4 | 0,20 |
| Haftung des Trägers zur PU-Haut [N/mm] | 3,90 |
| ak (23°C) - 260°C [kJ/m²] | 50 |
| ak (-30°C) - 260°C [kJ/m²] | 45 |
| Vicat B50 [°C] | 122,0 |
| Schmelzeviskosität (260°C/1000s⁻¹) [Pa·s] | nicht gemessen |

Tabelle 3 zeigt Einflüsse der Polyurethan-Zusammensetzung und der Werkzeugtemperaturen (Zusammensetzung des Substratmaterials in allen Fällen von Beispiel 9 in Tabelle 1)

**Tabelle 3:**

| | **12** | **9** | **13** | **14** | **15** | **16** |
|---|---|---|---|---|---|---|
| Kennzahl des PU-Systems | 90 | 95 | 105 | 115 | 105 | 105 |
| Temperatur der Substrat-seitigen Werkzeugkavität [°C] | 80 | 80 | 80 | 80 | 100 | 100 |
| Temperatur der PU-seitigen Werkzeugkavität [°C] | 80 | 80 | 80 | 80 | 80 | 100 |
| Haftung des Trägers zur PU-Haut [N/mm] | 0,91 | 1,05 | 1,27 | 2,50 | 0,84 | 0,95 |

Die Beispiele in Tabelle 1 zeigen, dass überraschenderweise und entgegen der Lehre aus dem Stand der Technik dann eine Verbesserung der Verbundhaftung zwischen thermoplastischem Träger und PU-Schicht auf das angestrebte Niveau von mindestens 1 N/mm im nach dem erfindungsgemäßen Verfahren hergestellten 2-Komponenten-Verbundbauteil erzielt wird, wenn der Anteil an Komponente A in der Trägerzusammensetzung einen Wert von 65 Gew.-Teilen, bezogen auf die Summe aus A und B, übersteigt (Vergleichsbeispiele 1-3 sowie Beispiele 4 und 5). Dieses ist deshalb als überraschend anzusehen, da der allgemeinen Erfahrung und der Lehre aus dem Stand der Technik bezüglich alternativer Verfahren zur Herstellung von vergleichbaren Verbundbauteilen folgend eine Verbesserung der Haftung zwischen Polycarbonat-Zusammensetzungen und einer PU-Schicht mit zunehmendem Anteil an Komponente B in der Polycarbonat-Zusammensetzung erwartet worden wäre (siehe zum Beispiel DE 10 2006 033 059 A1, welche offenbart, dass ABS-Materialien besonders vorteilhaft sind, da dieses eine dauerhafte Verbindung mit der Deckschicht eingehen). Die Verbundhaftung steigt jenseits des Gehaltes von 65 Gew.-Teilen mit steigendem Gehalt an Polycarbonatkomponente A in der Substratzusammensetzung weiter an (Beispiele 4 bis 6), wobei bei Überschreiten eines Gehalts an Polycarbonatkomponente A von etwa 90 Gew.-Teilen, bezogen auf die Summe aus A und B, kein zähes Verhalten der Trägerzusammensetzung mehr realisiert wird und/oder die Schmelzefließfähigkeit der thermoplastischen Trägerzusammensetzung auf ein im Allgemeinen unakzeptables Niveau fällt. Eine gute Balance aus Verarbeitbarkeit (Schmelzeviskosität) und Zähigkeit des Trägermaterials sowie Verbundhaftung des Bauteils wird daher nur bei Trägerzusammensetzungen mit einem Gehalt an Polycarbonatkomponente A im Bereich von 65 bis 90 Gew.-Teilen, bezogen auf die Summe aus A und B, realisiert. In diesem Konzentrationsbereich für die Polycarbonatkomponente A erweist sich die Verbundhaftung zwischen Trägerzusammensetzung und Polyurethanschicht dabei als weitgehend unabhängig von der Art des in der Trägerzusammensetzung enthaltenen Pfropfpolymerisats / Vinyl(co)polymerisat (Komponente B) sowie von dem Molekulargewicht des verwendeten Polycarbonats (Komponenten A) (vergleiche Beispiel 4 mit Beispielen 7-10).

Das Beispiel 11 in Tabelle 2 zeigt, dass dann eine besonders gute Verbundhaftung erzielt wird, wenn statt aromatischem Polycarbonat als Komponente A eine Mischung aus aromatischem Polycarbonat und aromatischem Polyester zum Einsatz kommt.

Die Beispiele in Tabelle 3 zeigen, dass dann eine ausreichende Verbundhaftung erzielt wird, wenn die Kennzahl des PU-Systems >90 ist. Eine besonders gute Verbundhaftung wird bei einer Kennzahl zwischen 105 und 115 erzielt (vergleiche Beispiele 9, 12, 13 und 14).

Darüber hinaus zeigen die Beispiele in Tabelle 3, dass dann eine besonders gute Verbundhaftung erzielt wird, wenn die Werkzeugtemperatur der substratseitigen Werkzeugkavität unter 100°C liegt (vergleiche Beispiele 13 und 15) und insbesondere dann, wenn darüber hinaus die Werkzeugtemperatur der PU-seitigen Kavität im Bereich größer 80°C liegt (vergleiche Beispiele 15 und 16).

## Patentansprüche

1. Verfahren zur Herstellung eines Verbundbauteils umfassend
a) einen Träger aus einer thermoplastischen Zusammensetzung, und
b) mindestens eine in direktem Kontakt zum Träger stehende Polyurethanschicht,
in dem
(i) in einem ersten Verfahrensschritt die Schmelze der thermoplastischen Zusammensetzung
in eine erste Werkzeugkavität eingespritzt und nachfolgend abgekühlt wird, wobei die thermoplastische Zusammensetzung
A) 65,0 bis 90,0 Gew.-Teile, bezogen auf die Summe der Komponenten A und B , mindestens eines Polymers ausgewählt aus der Gruppe der aromatischen Polycarbonate, aromatischen Polyestercarbonate und aromatischen Polyester,
B) 10,0 bis 35,0 Gew.-Teile, bezogen auf die Summe der Komponenten A und B, eines gegebenenfalls kautschukmodifizierten Vinyl(co)polymerisats und
C) 0 bis 30,0 Gew.-Teile, bezogen auf die Summe der Komponenten A bis C, mindestens eines handelsüblichen Polymeradditivs, enthält,
(ii) in einem zweiten Verfahrensschritt die Kavität des Spritzgusswerkzeugs vergrößert und dadurch ein Spaltraum erzeugt wird,
(iii) im dritten Verfahrensschritt in den so resultierenden Spaltraum zwischen dem thermoplastischen Bauteil und der Werkzeugoberfläche der vergrößerten Kavität ein reaktives Polyurethanrohstoffgemisch enthaltend
- mindestens eine Polyisocyanat-Komponente,
- mindestens eine poly funktionelle H-aktive Verbindung, und
- optional mindestens ein Polyurethan- Additiv und/oder Prozesshilfsstoff
gespritzt wird, wobei das Polyurethanrohstoffgemisch im Kontakt mit der Oberfläche des thermoplastischen Trägers zu einer kompakten Polyurethanschicht oder zu einer Polyurethanschaumschicht auspolymerisiert,
(iv) im vierten Verfahrensschritt das Verbundbauteil aus der Werkzeugkavität entformt wird, wobei die Verfahrensschritte unmittelbar aufeinander folgen.

2. Verfahren gemäß Anspruch 1, **dadurch gekennzeichnet, dass** das reaktive Polyurethanrohstoffgemisch eine Kennzahl von > 90 bis < 125 aufweist.

3. Verfahren gemäß Anspruch 1 oder 2, **dadurch gekennzeichnet, dass** als Komponente A ein Gemisch aus mindestens einem aromatischen Polycarbonat und/oder Polyestercarbonat und mindestens einem aromatischen Polyester zum Einsatz kommt.

4. Verfahren nach einem der vorhergehenden Ansprüche, **dadurch gekennzeichnet, dass** die Zusammensetzung des Trägermaterials 70,0 bis 80,0 Gew.-Teile der Komponente A, bezogen auf die Summe der Komponenten A und B, enthält.

5. Verfahren nach einem der vorhergehenden Ansprüche, **dadurch gekennzeichnet, dass** die Verfahrensschritte (ii) und (iii) unter Variation des Polyurethansystems mindestens einmal wiederholt werden.

6. Verfahren gemäß einem der vorhergehenden Ansprüche, **dadurch gekennzeichnet, dass** im Verfahrensschritt (iii) die mit der thermoplastischen Zusammensetzung in Kontakt stehende Oberfläche des Spritzgusswerkzeuges auf eine Temperatur im Bereich 50 bis 95°C und die mit dem reaktiven Polyurethangemisch in Kontakt stehende Oberfläche des Spritzgusswerkzeuges auf eine Temperatur im Bereich 50 bis 160°C temperiert wird.

7. Verfahren gemäß Anspruch 5 oder 6, **dadurch gekennzeichnet, dass** die Verfahrensschritte (ii) und (iii) mehrfach durchlaufen werden, die Verfahrensschritte unmittelbar aufeinander folgen, und im Verfahrenschritt (iii) die Temperatur der polyurethanseitigen Werkzeugkavität mindestens 10°C, bevorzugt mindestens 15°C, besonders bevorzugt mindestens 20°C höher als die Temperatur der trägerseitigen (thermoplastseitigen) Werkzeugkavität ist.

8. Verfahren gemäß einem der Ansprüche 1 bis 7, **dadurch gekennzeichnet, dass** die Komponente C ausgewählt ist aus mindestens einem Vertreter der Gruppe bestehend aus Flammschutzmitteln, Flammschutzsynergisten, rauchhemmenden Additiven, Antidrippingmitteln, internen und externen Gleit- und Entformungsmitteln, Fließfähigkeitshilfsmitteln, Antistatika, Leitfähigkeitsadditiven, Nukleirmitteln, Stabilisatoren, antibakteriell wirkenden Additiven, kratzfestigkeitsverbessernden Additiven, IR-Absorbentien, optischen Aufhellern, fluoreszierenden Additiven, Füll- und Verstärkungsstoffen, Farbstoffen und Pigmenten, Schlagzähmodifikatoren, die nicht unter die Definition der Komponente B.1 fallen, und Brönstedt-sauren Verbindungen.

9. Verfahren nach einem der Ansprüche 1 bis 8 zur Herstellung eines mit mindestens einem Polyurethan beschichteten Zwei- oder Mehrkomponentenbauteils in einem 2-Komponenten-Spritzguss- oder 2-Komponenten-Reaktivspritzgussprozess.

10. Verwendung eines Verbundbauteils erhältlich gemäß einem Verfahren der Ansprüche 1 bis 9 als Innen- oder Außenbauteil eines Schienen-, Luftfahrt- oder Kraftfahrzeuges.

## Claims

1. Process for the production of a composite component, comprising
a) a support of a thermoplastic composition, and
b) at least one polyurethane layer in direct contact with the support,
in which
(i) in a first process step the melt of the thermoplastic composition is injected into a first mould cavity and is subsequently cooled, the thermoplastic composition comprising
A) 65.0 to 90.0 parts by wt., based on the sum of components A and B, of at least one polymer chosen from the group of aromatic polycarbonates, aromatic polyester carbonates and aromatic polyesters,
B) 10.0 to 35.0 parts by wt., based on the sum of components A and B, of an optionally rubber-modified vinyl (co)polymer and
C) 0 to 30.0 parts by wt., based on the sum of components A to C, of at least one commercially available polymer additive,
(ii) in a second process step the cavity of the injection mould is enlarged and a gap is thereby generated,
(iii) in the third process step a reactive polyurethane raw material mixture comprising
- at least one polyisocyanate component,
- at least one polyfunctional H-active compound, and
- optionally at least one polyurethane additive and/or process auxiliary substance
is injected into the gap resulting in this way between the thermoplastic component and the mould surface of the enlarged cavity, the polyurethane raw material mixture polymerizing completely in contact with the surface of the thermoplastic support to give a compact polyurethane layer or to give a polyurethane foam layer,
(iv) in the fourth process step the composite component is removed from the mould cavity, the process steps following one another directly.

2. Process according to claim 1, **characterized in that** the reactive polyurethane raw material mixture has a characteristic number of from > 90 to < 125.

3. Process according to claim 1 or 2, **characterized in that** a mixture of at least one aromatic polycarbonate and/or polyester carbonate and at least one aromatic polyester is employed as component A.

4. Process according to one of the preceding claims, **characterized in that** the composition of the support material comprises 70.0 to 80.0 parts by wt. of component A, based on the sum of components A and B.

5. Process according to one of the preceding claims, **characterized in that** process steps (ii) and (iii) are repeated at least once with variation of the polyurethane system.

6. Process according to one of the preceding claims, **characterized in that** in process step (iii) the surface of the injection mould in contact with the thermoplastic composition is temperature-controlled at a temperature in the range of 50 to 95 °C and the surface of the injection mould in contact with the reactive polyurethane mixture is temperature-controlled at a temperature in the range of 50 to 160 °C.

7. Process according to claim 5 or 6, **characterized in that** process steps (ii) and (iii) are passed through several times, the process steps follow one another directly, and in process step (iii) the temperature of the mould cavity on the polyurethane side is at least 10 °C, preferably at least 15 °C, particularly preferably at least 20 °C higher than the temperature of the mould cavity on the support side (thermoplastic side).

8. Process according to one of claims 1 to 7, **characterized in that** component C is chosen from at least one representative from the group consisting of flameproofing agents, flameproofing synergists, smokesuppressing additives, antidripping agents, internal and external lubricants and mould release agents, flowability auxiliary agents, antistatics, conductivity additives, nucleating agents, stabilizers, antibacterially acting additives, additives which improve scratch resistance, IR absorbents, optical brighteners, fluorescent additives, fillers and reinforcing substances, dyestuffs and pigments, impact modifiers which do not fall under the definition of component B.1, and Brønstedt acid compounds.

9. Process according to one of claims 1 to 8 for the production of a two- or multicomponent part, coated with at least one polyurethane, in a 2-component injection moulding or 2-component reactive injection moulding process.

10. Use of a composite component obtainable by a process of claims 1 to 9 as an interior or exterior component of a track, air travel or motor vehicle.

## Revendications

1. Procédé de fabrication d'un élément composite, comprenant
a) un support en une composition thermoplastique, et
b) au moins une couche de polyuréthane se trouvant en contact direct avec le support,
dans lequel
(i) dans une première étape du procédé, on injecte le bain fondu de la composition thermoplastique dans une première cavité d'outil et ensuite on le refroidit, dans lequel la composition thermoplastique contient
A) 65,0 à 90,0 parties en poids, rapportées à la somme des composants A et B, d'au moins un polymère sélectionné dans le groupe des polycarbonates aromatiques, des polyester carbonates aromatiques et des polyesters aromatiques,
B) 10,0 à 35,0 parties en poids, rapportées à la somme des composants A et B, d'un (co)polymérisat de vinyle éventuellement modifié au caoutchouc, et
C) 0 à 30,0 parties en poids, rapportées à la somme des composants A à C, d'au moins un additif polymère du commerce,
(ii) dans une deuxième étape de procédé, on agrandit la cavité de l'outil de moulage par injection et on produit ainsi une chambre à fente,
(iii) dans la troisième étape de procédé, on injecte dans la chambre à fente ainsi obtenue, entre l'élément thermoplastique et la surface d'outil de la cavité agrandie, un mélange réactif de matière brute de polyuréthane contenant
- au moins un composant polyisocyanate,
- au moins un composé H-actif polyfonctionnel, et
- en option au moins un additif de polyuréthane et/ou une matière auxiliaire de traitement,
dans lequel le mélange de matière brute de polyuréthane se polymérise en contact avec la surface du support thermoplastique en une couche de polyuréthane compacte ou en une couche de mousse de polyuréthane,
(iv) dans la quatrième étape de procédé, on démoule l'élément composite hors de la cavité d'outil, les étapes de procédé se succédant immédiatement.

2. Procédé selon la revendication 1, **caractérisé en ce que** le mélange réactif de matière brute de polyuréthane présente un nombre caractéristique de > 90 à < 125.

3. Procédé selon la revendication 1 ou 2, **caractérisé en ce que** l'on utilise comme composant A un mélange composé d'au moins un polycarbonate et/ou un polyester carbonate aromatique et d'au moins un polyester aromatique.

4. Procédé selon l'une quelconque des revendications précédentes, **caractérisé en ce que** la composition du matériau du support contient 70,0 à 80,0 parties en poids du composant A, rapportées à la somme des composants A et B.

5. Procédé selon l'une quelconque des revendications précédentes, **caractérisé en ce que** l'on répète au moins une fois les étapes de procédé (ii) et (iii) en faisant varier le système de polyuréthane.

6. Procédé selon l'une quelconque des revendications précédentes, **caractérisé en ce que** dans l'étape de procédé (iii), on égalise la température de la surface de l'outil de moulage par injection se trouvant en contact avec la composition thermoplastique à une température dans la plage de 50 à 95°C et la surface de l'outil de moulage par injection se trouvant en contact avec le mélange réactif de polyuréthane à une température dans la plage de 50 à 160°C.

7. Procédé selon la revendication 5 ou 6, **caractérisé en ce que** l'on exécute plusieurs fois les étapes de procédé (ii) et (iii), les étapes de procédé se succèdent immédiatement, et dans l'étape de procédé (iii) la température de la cavité d'outil côté polyuréthane est d'au moins 10°C, de préférence d'au moins 15°C, de préférence encore d'au moins 20°C plus élevée que la température de la cavité d'outil côté support (côté thermoplastique).

8. Procédé selon l'une quelconque des revendications 1 à 7, **caractérisé en ce que** le composant C est sélectionné parmi au moins un représentant du groupe composé d'agents retardateurs de flamme, de synergistes de retardateur de flamme, d'additifs anti-fumée, d'agents anti-gouttes, d'agents de glissement et de démoulage internes et externes, d'agents fluidifiants, d'antistatiques, d'additifs de conductibilité, d'agents nucléants, de stabilisateurs, d'additifs à action antibactérienne, d'additifs améliorant la résistance aux éraflures, d'absorbants IR, d'éclaircissants optiques, d'additifs fluorescents, de matières de charge et de renforcement, de colorants et de pigments, de modificateurs de résilience, qui ne rentrent pas dans la définition du composant B.1, et de composés acides de Brönstedt.

9. Procédé selon l'une quelconque des revendications 1 à 8 pour la fabrication d'un élément à deux ou plusieurs composants revêtu d'au moins un polyuréthane dans un procédé de moulage par injection à 2 composants ou un procédé de moulage réactif par injection à 2 composants.

10. Utilisation d'un élément composite pouvant être obtenu par un procédé des revendications 1 à 9, comme élément intérieur ou extérieur d'un véhicule ferroviaire, aérien ou automobile.
